# EUROPEAN PATENT APPLICATION

(11) **EP 4 467 213 A1**
(43) Date of publication of application: **27.11.2024**
(21) Application number: 24164442.6
(22) Date of filing: 19.03.2024
(51) Int. Cl.: A63F 1/02, A63F 1/06, A63F 1/04, A63F 11/00

(54) **GAME TOY**

(30) Priority: 25.05.2023 JP 2023086387
(71) Applicant: Bandai Co., Ltd., Tokyo 111-8081 (JP)
(72) Inventor: GOTO, Kohei, 111-8081 Tokyo (JP); IMAMURA, Takuya, 111-8081 Tokyo (JP)
(74) Representative: Studio Torta S.p.A.

(57) **Abstract**

A game toy comprises first type items, and second type items which serve as an element for constructing a deck, wherein the first type items are associated with a first type character, the second type items are associated with a second type character, the first type items include two or more pieces of identification information, which is visually identifiable, the second type item includes one of the two or more pieces of the identification information which is visually identifiable, groups to which the first type character and the second type character respectively belong are identified from the identification information, and the deck can be constructed from the second type items, which include any one of the two or more pieces of identification information of the first type character.

## Description

### CROSS-REFERENCE TO RELATED APPLICATIONS

The disclosure of Japanese Patent Application No. JP2023-086387 filed on May 25, 2023 including specification, drawings and claims is incorporated herein by reference in its entirety.

### TECHNICAL FIELD

The present invention relates to a game toy.

### BACKGROUND

Among competitive card games, there is a game for activating special effects by combining two or more types of cards placed on a playmat (For example, Patent Document 1).

### PRIOR ART

### PATENT DOCUMENTS

[Patent Document 1] Japanese Patent Application Publication No. 2006-247178

### SUMMARY

### TECHNICAL PROBLEM

In such a game, a story characteristic thereof is important. If the game has broad utility while maintaining the story characteristic, enjoyability of the game can be improved.

### SOLUTION TO PROBLEM

Here, it is an object of the present invention to provide a game toy capable of improving enjoyability of the game.

One of an aspect of the present invention is a game toy. The game toy includes first type items, and second type items which serve as an element forming a deck, wherein the first type items are respectively associated with a first type character, and the second type items are respectively associated with a second character. Further, each of the first type items includes a plurality of pieces of identification information which are visually identifiable, wherein the identification information includes information for identifying a group to which each of the first typed character and the second type character belong. The deck may be constructed from the second type items which include any one(s) of the plurality of pieces of identification information of the first type items.

### ADVANTAGEOUS EFFECT OF INVENTION

According to the present invention, it is possible to provide a game toy for enhancing the enjoyability of the game toy.

### BRIEF DESCRIPTION OF DRAWINGS

FIG. 1 is an overview diagram of a game toy according to an embodiment;
FIG. 2 is a diagram illustrating an example of a back side face of a game card 2;
FIG. 3 is a diagram illustrating an example of a front side face of a cost card 10;
FIG. 4 is a diagram illustrating an example of a front side face of a character card 20;
FIG. 5 is a diagram illustrating an example of a front side face of a leader card 30;
FIG. 6 is a diagram illustrating an example of a front side face of a multi-leader card 40;
FIG. 7 is a diagram illustrating an example of a front side face of a stage card 50;
FIG. 8 is a diagram illustrating an example of a front side face of an event card 60;
FIG. 9 is an example illustrating a deck, which is used in the game;
FIG. 10 is an example illustrating an Example;
FIG. 11 is an example illustrating the Example;
FIG. 12 is an example illustrating the Example; and
FIG. 13 is an example illustrating the Example.

### DETAILED DESCRIPTION

The present embodiment will be explained below.

The present invention relates to a game toy, and the game relates to a competitive game where players battle against each other by placing game items on a playmat. A character is associated with each of the game items. Ttwo or more regions (areas) for placing game items are allocated on the playmat. Players place game items in any of the regions (areas) on the playmat and play the game using the abilities of the characters respectively associated with the game items.

The game items include first type items, second type items, third type items, and fourth type items. The first type items, the second type items, and the third type items are respectively associated with specific characters. On the other hand, the fourth type items are not associated with such a specific character. Here, characters include people, animals, events, etc.

The first type items, the second type items, and the third type items respectively contain visually identifiable identification information. This identification information is group identification information for identifying a group to which a character associated with each item belongs to. Here, a group means, for example, a team to which characters belong, or an episode etc. in which the characters appears, etc. The group identification information can be of any type thereof which can identify the group, such as textual information of a group name, color information for identifying a group, etc.

The first type items and the third type items are respectively associated with first type characters. Each of the first type characters is a leader of a group, and the central figure in the group. The first type items and third type items are different in the number of pieces of group identification information contained therein. The first type items respectively contain group identification information of all the groups existing in the game. On the other hand, the third type items contain one or two pieces of the group identification information wherein the groups exist in the game.

The second type items are associated with second type characters. The second type characters are characters each of which belongs to a group, and are characters who are companions of a group leader and characters who trigger events. Each of the second type items contains group identification information of one of the groups existing in the game.

Additionally, the second type items serve as component elements which form a collection of two or more second type items used in a competitive game, as a so-called deck. However, the second type items which can serve as such component elements of a deck are limited to those containing group identification information, which is the same as the group identification information contained in the first type items or the third type items used in the game. In other words, the second type items containing the group identification information which is the same as that contained in first type items or the third type items used in the game can be used as the component elements for the deck used in the game. This ensures that only companions of a first type character who becomes a leader or only second type characters appearing in the same episode can appear in the game, thereby providing the story characteristic to the game.

The fourth type items are not associated with any specific character, but serve as consideration of cost for bringing a second type item into play in the game. Additionally, the fourth type items do not contain group identification information.

In a description set forth below, the first type items, the second type items, the third type items, and the fourth type items, which are game cards, will be used as an example, but these items are not limited to such cards. For example, they may be three-dimensional figures.

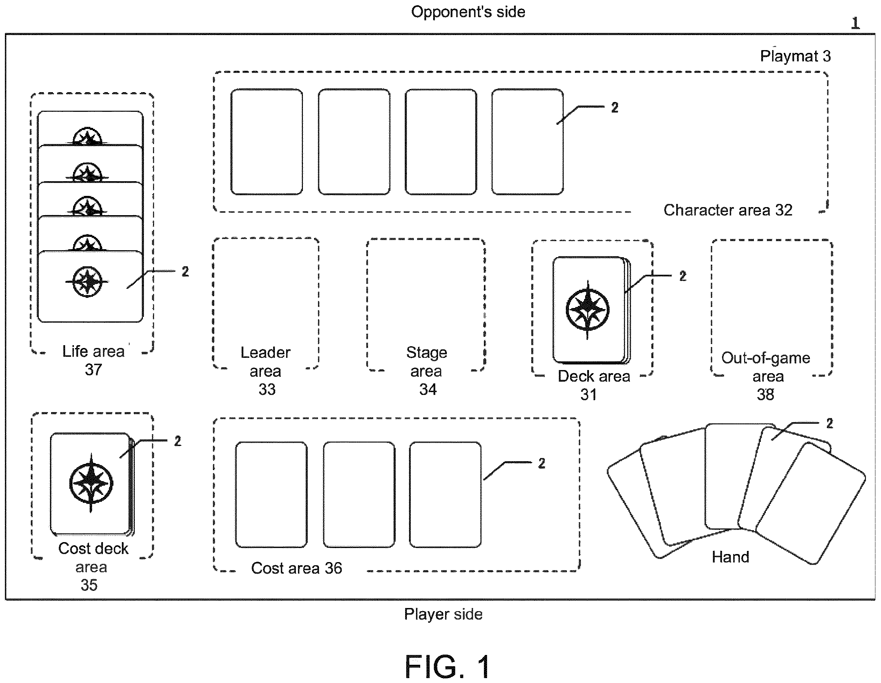

FIG. 1 is a schematic diagram explaining the game toy 1 according to the present embodiment. As shown in FIG. 1, the game toy 1 includes game cards 2 and a playmat 3.

The game cards 2 correspond to the game items described above, and are owned by players. The players can acquire such game cards 2 through purchase, exchange of the cards between players, distribution to the players who have met certain conditions, and the like.

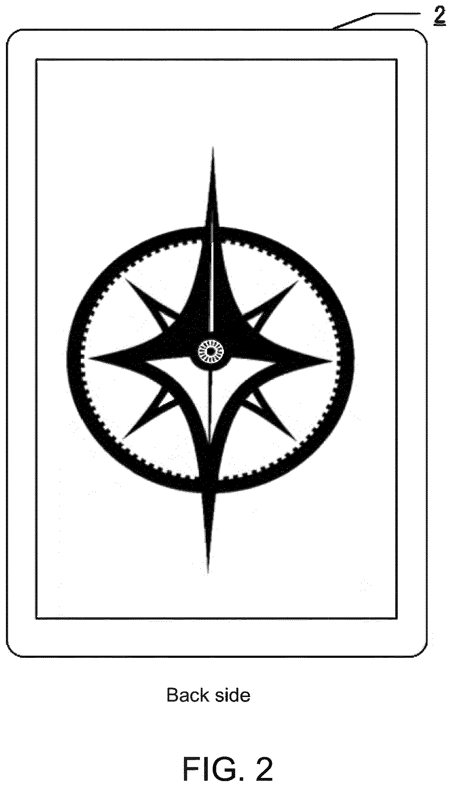

Each of the game cards 2 has a front side face and a back side face. A common design, and text is drawn on the back side face of each game card regardless of the card types. In other words, the front side face of the game card 2 (a face from which the type of the game card 2 can be recognized) cannot be identified from the back side face thereof. FIG. 2 shows an example of the back side face of a game card 2.

The game card 2 has a normal orientation where a player can read the content written on the front side face of the game card 2 without changing the orientation. In the description set forth below, a state where the game card 2 is placed in the normal orientation is referred to as an active state. A state of a lateral orientation thereof where the game card 2 is rotated by 90 degrees from the normal orientation, is referred to as a rest state. A predetermined orientation may be designated as the active state in advance, and the game card 2 may be considered to be in the rest state when the orientation of the game card is changed from the predetermined orientation.

In the present embodiment, a plurality of types of front side face are prepared as game cards 2. Each of the game cards 2 has a different front side face depending on a type in the information written thereon. In the description set forth below, an example will be explained, using game cards 2 without color information (the group identification information), that is, the cost card 10 (corresponding to the fourth type game items). In the description below, as an example of the game cards 2 with color information, character cards 20 (corresponding to the second type game items), normal leader cards 30 (corresponding to the third type game items), multi-leader cards 40 (corresponding to the first game items), stage cards 50 (corresponding to the second type game items) and event cards 60 (corresponding to the second type game items) are used. As long as there are cards without color information and such cards with color information, any number of types of the game cards 2 can be set.

The color information is information about color for identifying a group(s) to which the character associated with the character card 20, the leader card 30, the multi-leader card 40, the stage card 50, or the event card 60 belongs. The color information is shown at the same position of the character cards 20, the leader card 30, the multi-leader card 40, the stage cards 50, or the event cards 60. In the present embodiment, the characters are divided into a total of six groups, and one of red (R), green (G), blue (Bl), purple (P), black (Bk), and yellow (Y) as color information is assigned to each group. As an example, one piece of color information is assigned to one of triangular regions obtained by dividing a hexagon, which serves as the arrangement part of the color information. The number of groups or the color representing each group can be changed as needed.

A character associated with a character card(s) 20, a leader card(s) 30, a multi-leader card(s) 40, a stage cards 50, and an event card 60, which have the same color information, belong to the same group. A group can be a team (allies), an episode, etc. As described later, a deck can be constructed from character cards 20, stage cards 50, and event cards 60 having color information which is the same as that of the leader card 30 and the multi-leader card 40. This allows the game to have a story characteristic element.

### <Cost Card 10>

The cost cards 10 correspond to the fourth type items.

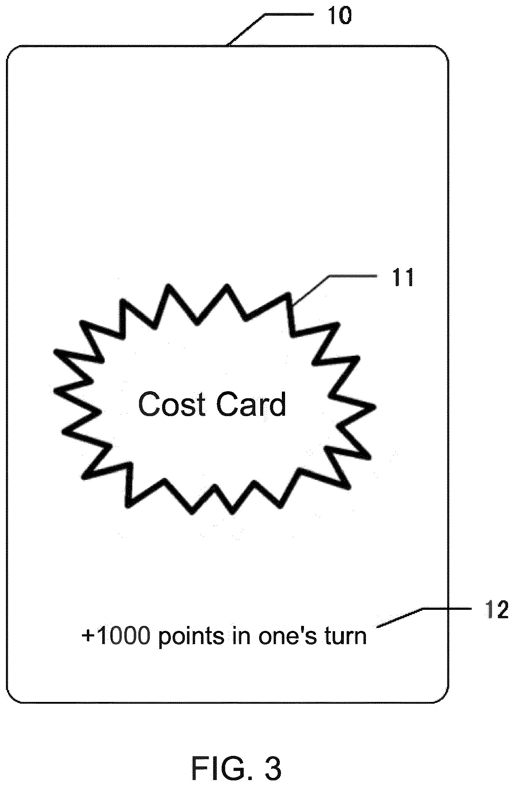

FIG. 3 is a diagram illustrating an example of the front side face of a cost card. The cost card 10 serves as first and second functions. The first function serves as an element of the cost for placing a character card 20, a stage card 50, and an event card 60 from the user's hand onto the playmat 3. In this card game, depending on the number of cost cards 10 placed on the playmat 3, the number of game cards 2 which can be placed from the hand onto the play sheet 3 is restricted. That is, in order to place game cards 2 from the hand onto the playmat 3, the number of cost cards 10 matching the condition of the game card 2 must be present. Therefore, the cost cards 10 serve as an element of the condition for placing such game cards 2 from the user's hand onto the playmat 3, and this is the first function of these cost cards 10.

The second function increases an attack value of a character card 20, leader card 30, or multi-leader card 40 when combined with a cost card 10. In this card game, the cost cards 10 placed on the playmat 3 can be used in combination with the character card 20, leader card 30, or multi-leader card 40. By combining the cost card 10 with the character card 20, leader card 30, or multi-leader card 40 during the user's turn, the attack value of the combined character card 20, leader card 30, or multi-leader card 40 increases.

As shown in FIG. 3, the cost card 10 includes card type information 11, which indicates that the card is a cost card, and second function information 12, which relates to the second function of the cost card 10. In the example shown in FIG. 3, "+1000 points in one's turn" is written as the second function information 12. In this example, when the character card 20, leader card 30 or multi-leader card 40 is combined with the cost card 10, the attack value of the character card 20, leader card 30 or multi-leader card 40 increases by "1000" points.

### <Character Card 20>

The character cards 20 corresponds to the second type items.

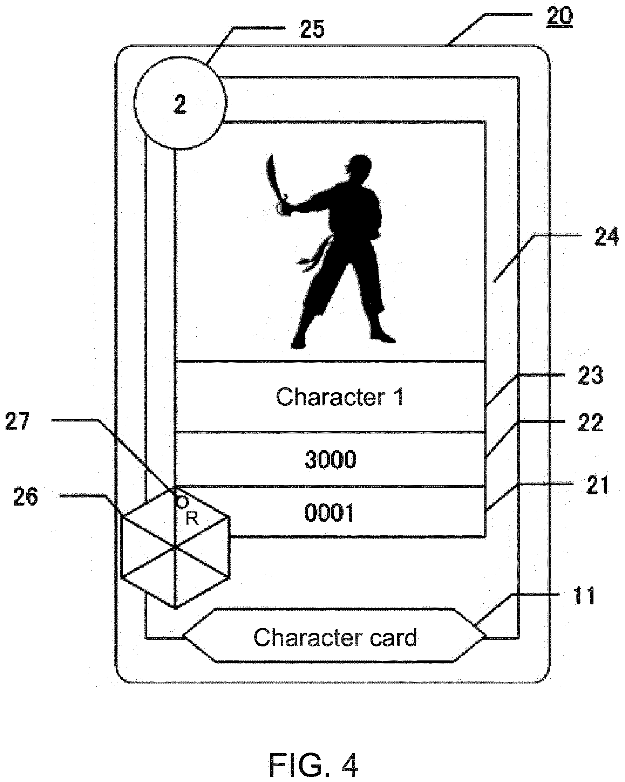

FIG. 4 is a diagram illustrating an example of the front side face of a character card 20. The character card 20 includes card type information 11, card identification information 21, power information 22, a character name 23, a character image 24, cost information 25, color information arrangement part 26, and color information 27.

The card type information 11 indicates the type of the card. In case of a character card 20, the card type information 11 indicates the card is a character card. The card identification information 21 is information, such as a card number, from which the game card 2 can be uniquely identified. The power information 22 is numerical information indicating an attack value against game cards 2 of the opponent player. The character name 23 is a name of the character associated with the character card 20. The character image 24 is an image of the character associated with the game card.

The cost information 25 is numerical information indicating a cost required for a player to place a character card 20 from the hand onto the playmat 3. In the example of FIG. 4, the cost information 25 is "2", indicating that two cost cards 10 are required to place the character card 20 onto the playmat 3.

The color information arrangement part 26 is a section which shows the color information 27 corresponding to a group to which the character associated with character card 20 belongs. In the present embodiment, since the characters are divided into a total of six groups, the color information arrangement part 26 is hexagonal in shape, and one piece of the color information 27 is assigned to each triangular shape obtained by dividing the hexagonal shape into six equal parts. The color indicated by color information 27 represents the group to which the character belongs and there is only one piece of the color information 27 for the character card 20. FIG. 4 shows an example of color information 27 which is "R", indicating that the character 1 of the character card 20 belongs to the "red" group. Note that in the example of FIG. 4, the color information 27 is shown in text, but the color information 27 may be shown by coloring the assigned triangular shape in the color of the group. The triangular shape of color information 27 may be colored in "red" in FIG. 4.

### <Leader Card 30>

The leader card 30 corresponds to the third type item.

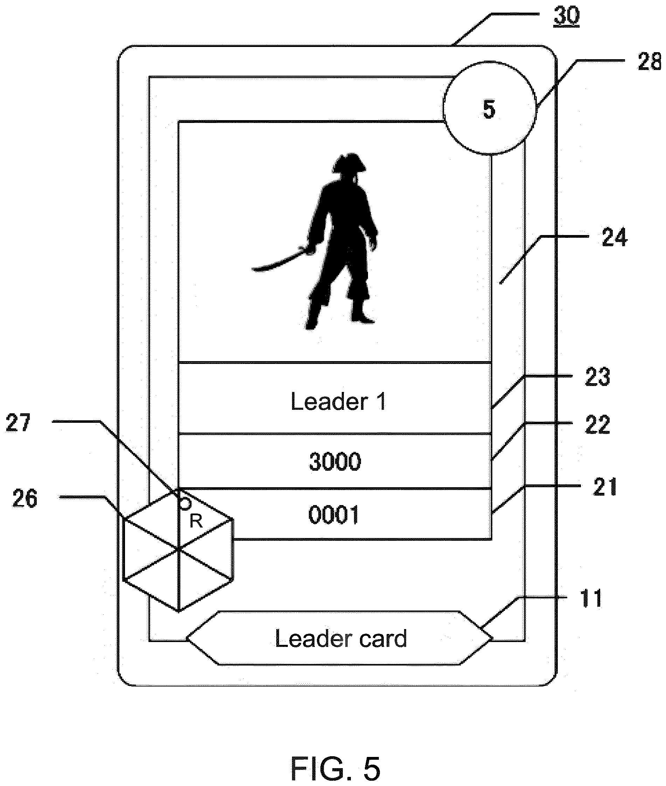

FIG. 5 is a diagram illustrating an example of the front side face of a leader card 30. The leader card 30 includes card type information 11, card identification information 21, power information 22, a character name 23, a character image 24, a color information arrangement part 26, color information 27, and life information 28.

The card type information 11 indicates the type of the card. In the case of a leader card 30, the card type information 11 indicates that the card is a leader card. The card identification information 21 is information such as a card number, from which the game card 2 is uniquely identified. The power information 22 is numerical information indicating an attack value against a game card 2 owned by the opponent player. The character name 23 is a name of the character associated with the leader card 30. The character image 24 is an image of the character associated with the leader card 30. It should be noted that the character associated with such the leader card 30 is a leader of the group identified by the color information 27.

The color information arrangement part 26 is a section which shows the color information 27 corresponding to the group to which the character associated with the leader card 30 belongs. In the present embodiment, since the characters are divided into a total of six groups, the color information arrangement part 26 is hexagonal in shape, and one piece of color information 27 is assigned to each triangular shape obtained by dividing the hexagonal shape into six equal parts. The color indicated by the color information 27 represents the group to which the character belongs. The color information 27 of the leader card 30 includes only one or two pieces thereof. In FIG. 5, the leader card 30 shows an example of color information 27 which is "R", indicating that the leader 1 of the leader card 30 belongs to the "red" group. Note that in the example of FIG. 5, the color information 27 is shown in text, but it is also acceptable to indicate the color information 27 by coloring the assigned triangular shape in the color of the group. For example, the triangular shape of the color information 27 shown in FG. 5 may be colored in "red". Also, while the one or two pieces of the color information 27 of the leader card 30 is described above as an example, the number thereof may be smaller than the total number of groups.

Furthermore, the color information 27 of the leader card 30 serves as a guideline when constructing a deck. When using the leader card 30 in the game, the deck used in the game can be constructed from a character card(s) 20, a stage card(s) 50, and an event card(s) 60, each of which have the same color information 27 as that of the leader card 30. For example, when using the leader card 30 with the color information 27 which is "red" in the game, the deck used in the game can be constructed from a character card(s) 20, a stage card(s) 50, and an event card(s) 60, each of which have the color information 27 of "red".

The life information 28 includes the number of character cards 20 which can be placed in the life area of the playmat 3 at the start of the game.

### <Multi-Leader Card 40>

The multi-leader card 40 corresponds to the first type item.

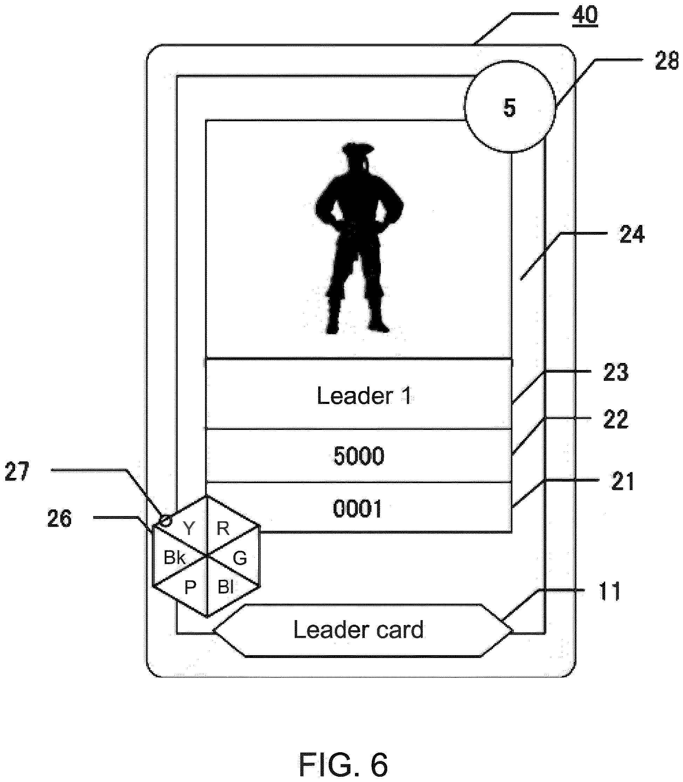

FIG. 6 is a diagram illustrating an example of the front side face of a multi-leader card 40. The multi-leader card 40 includes card type information 11, card identification information 21, power information 22, a character name 23, a character image 24, a color information arrangement part 26, color information 27, and life information 28.

The card type information 11 indicates the type of the card. In the case of a multi-leader card 40, the card can be recognized as a leader card from the card type information 11. The card identification information 21 is information such as a card number, from which the game card 2 is uniquely identified. The power information 22 is a numerical value indicating an attack value against a game card 2 of the opponent player. The character name 23 is a name of the character associated with the multi-leader card 40. The character image 24 is an image of the character associated with the multi-leader card 40. It should be noted that the character associated with the multi-leader card 40 may become a leader of the group identified by the color information 27.

Similar to the character card 20, the color information arrangement section 26 is a section for arranging the color information 27 corresponding to the group to which the character associated with the multi-leader card 40 belongs.

The multi-leader card 40 is different from the leader card 30 in that while in the leader card 30, color information 27 of only some (one or two) among all the groups is allocated in the color information arrangement section 26, in the multi-leader card 40, the color information 27 of all groups (red (R), green (G), blue (Bl), purple (P), black (Bk), yellow(Y)) is allocated in the color information arrangement section 26. Consequently, when using the multi-leader card 40, it is possible to construct a deck using a character card(s) 20, a stage card(s) 50, and an event card(s) 60 with any of the color information 27 (red (R), green (G), blue (Bl), purple (P), black (Bk), yellow (Y)) of all the groups. That is, it is possible to construct a single deck (multi-color deck) using such a character card(s) 20, stage card(s) 50, and event card(s) 60 whose color information 27 is different from one another.

The multi-leader card 40 is provided for the players who own a small number of game cards 2. In this game, as mentioned above, it is possible to construct a deck from only a character card(s) 20, a stage card(s) 50, and an event card(s) 60 which have the same color information 27 as the color information 27 of the leader card 30. However, if the number of game cards 2 owned by the players is small, it will be difficult for the players to obtain the required number of such a character card(s) 20, stage card(s) 50, and event card(s) 60 which have the same color information 27 as that of the leader card 30 (e.g., 50 cards) in order to construct a deck. Neglection of such cases would be unfair to the players. Therefore, it is possible to resolve this issue by providing the multi-leader card 40 with all the color information 27.

Another reason therefor is that since this game emphasizes story characteristics, characters such as character cards 20 are supposed to belong to any one of the groups, but specific characters such as character cards 20 are not necessarily belong to only one group. In such cases, a character card 20, etc. may have two or more pieces of the color information 27. However, there may be case where two or more types of character cards 20, etc., have the same character but different color information 27. In such case, the story characteristic is diluted, thereby becoming complicated. Therefore, this issue is resolved by providing the multi-leader card(s) 40 having all the color information 27, so that a deck can be formed from such a character card(s) 20, a stage card(s) 50, and an event card(s) 60, which are associated with a character belonging to two or more groups.

As an example of the above-described case, there is an event etc. where a game is played by using a deck, which is constructed from solely game cards 2, included in a package sold for a limited time. As mentioned above, such a package sold for a limited time contains game cards 2 with different color information 27, so that the game cards with different color information 27 are mixed in the package. By using the multi-leader card 40, players can construct a deck from solely the game cards 2 included in that package, even if all the game cards 2 do not have the same color information 27. Additionally, in order to ensure that the players can obtain a multi-leader card 40, there are a method for distributing such a multi-leader card 40 to players who participate in the event, a method for enclosing such a multi-leader card 40 in all the packages, and a method for explicitly displaying a statement to the effect that such a multi-leader card 40 is enclosed, on a package in which the multi-leader card 40 is enclosed.

Furthermore, such game cards 2 included in packages sold for a limited time, have common color information 27, so that the game cards 2 can be used under normal rules even after the event ends, thereby ensuring that the players will not waste the game cards 2 included in the package.

The life information 28 indicates the number of character cards 20 which can be placed on the life area of the playmat 3 at the start of the game.

### <Stage Card 50>

The stage card 50 corresponds to the second type item.

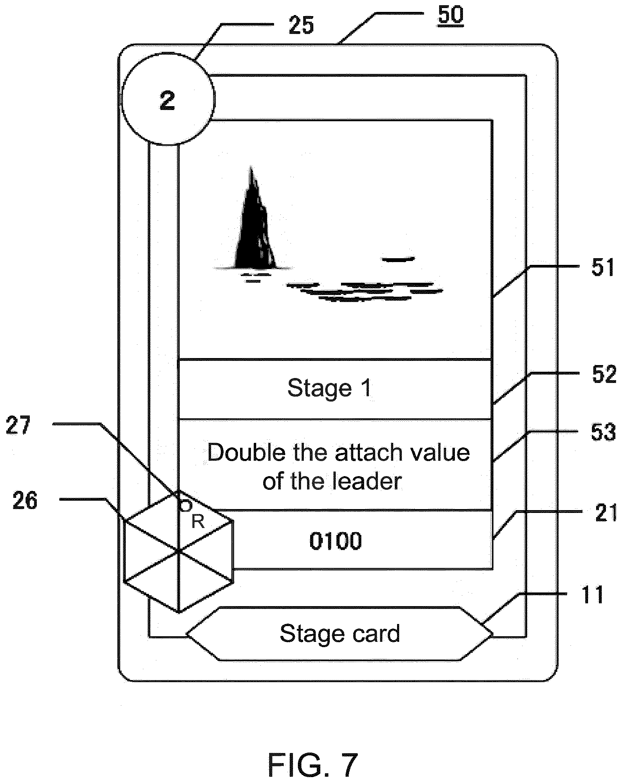

FIG. 7 is a diagram explaining an example of the front side face of a stage card 50. By placing the stage card 50 on the play sheet 3 (bringing it into play), the effect stated on the stage card 50 is exerted during the game progression.

The stage card 50 includes card type information 11, card identification information 21, cost information 25, color information arrangement part 26, color information 27, a stage image 51, a stage name 52, and stage effect information 53.

The card type information 11 indicates the type of the card. In the case of a stage card 50, the card type information 11 thereof is information etc. from which the card can be recognized as a stage card. The card identification information 21 is information such as a card number, from which the game card 2 is uniquely identified.

The cost information 25 indicates a cost such as a numerical value, which is required for the player to place the stage card 50 from his or her hand onto the playmat 3. In the example of FIG. 7, the cost information 25 is "2", indicating that two cost cards 10 are needed to place the stage card 50 onto the playmat 3.

The color information arrangement part 26 is a section which shows the color information 27 corresponding to the group to which the character associated with the stage card 50 belongs. As mentioned above, in this embodiment, the total number of character groups is six. Therefore, the color information arrangement part 26 has a hexagonal shape, in which one piece of the color information 27 is assigned to each triangular section formed by dividing the hexagon into six equal area parts. The color indicated by the color information 27 represents the group to which the character belongs. There is only one piece of the color information 27 for the stage card 50. The example of the stage card 50 shown in FIG. 7 illustrates an example in which the color information 27 is "R", indicating that the character of the stage card 50 belongs to the "red" group.

The stage name 52 is a name of a stage (character) associated with the stage card 50. The stage image 51 is an image of the stage (character). It is preferable that at least some of the effects exerted by the stage card 50 be recognized in an intuitive manner from the stage image 51. By this configuration, even if players do not remember the effects of the stage cards 50 one by one, they can intuitively understand some of the effects, thereby eliminating the possibility that the game play is hindered because the players spend energy for trying to grasp the effects of cards, and thereby ensuring that the interest of the game is not lost.

The stage effect information 53 is information regarding the effect exerted when the stage card 50 is placed on the playmat 3.

### <Event Card 60>

The event card 60 corresponds to the second type item.

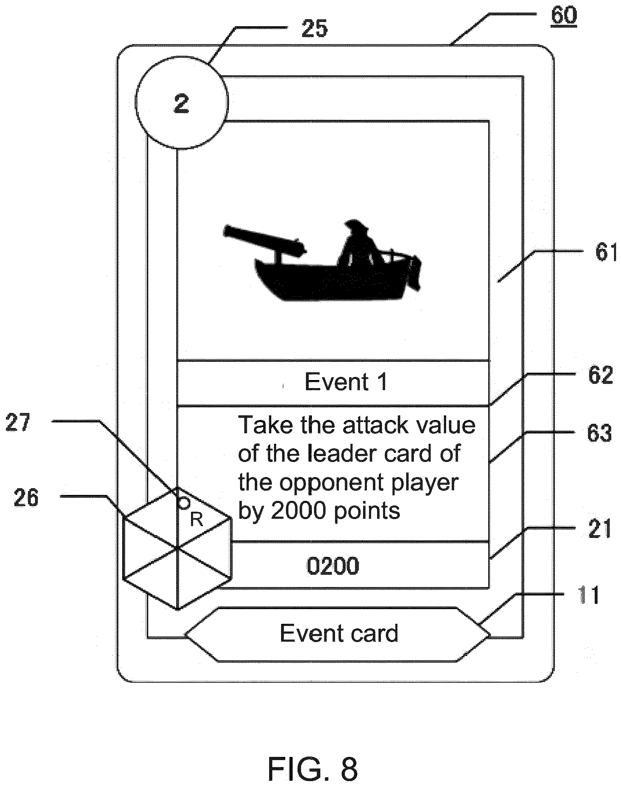

FIG. 8 is a diagram illustrating an example of the front side face of an event card 60. By placing the event card 60 on the playmat 3 (bringing it into play), the effect of the event stated on the event card 60 is exerted in the progression of the game.

The event card 60 includes card type information 11, card identification information 21, cost information 25, color information arrangement part 26, color information 27, an event image 61, an event name 62, and event effect information 63.

The card type information 11 indicates the type of the card. In the case of the event card 60, the card type information 11 is information etc., from which the 'card can be recognized as an event card. The card identification information 21 is a card number etc., from which the game card is uniquely identified.

The cost information 25 is, for example, a numerical value indicating a cost, which is required for the plater to place the event card 60 from his or her hand onto the playmat 3. In the example shown in FIG. 8, the cost information 25 is "2", indicating that two cost cards 10 are required to place the event card 60 onto the playmat 3.

The color information arrangement part 26 is a section for showing the color information 27 corresponding to a group to which the event (character) associated with the event card 60 belongs. As described above, in this embodiment, characters are grouped into a total of six groups. Therefore, the color information arrangement part 26 is hexagonal in shape, so that one piece of the color information 27 is assigned to each triangle formed by dividing the hexagonal shape into six equal parts. The color indicated by the color information 27 represents the group to which the character of the event card 60 belongs. The event card 60 includes only one piece of color information 27. In the example of the event card 60 in FIG. 8, the color information 27 is "R," indicating that the character of the event card 60 belongs to the "red" group.

The event name 62 is a name of an event (character) associated with the event card 60. The event image 61 is an image of the event (character). Note that the event image 61 is preferably an image from which at least some of the effects exerted by the event card 60 can be intuitively understood. By this configuration, even if the players do not remember the effects of the event cards 60 one by one, some parts of the effects can be intuitively understood, thereby preventing the game progression from being hindered due to energy spent for grasping the effects of the cards and thereby ensuring that the interest of the game is not lost.

The event effect information 63 is information regarding the effect set when the event card 60 is placed on the play sheet 3.

Although the card type information 11 indicates the type of the game card 2 on each game card 2 in the above explanation, it may also identify the type of each game card 2 based on the basic color of the card. In particular, it is preferable that leader cards 30 and multi-leader cards 40, which correspond to the first type game items may have different colors from character cards 20, stage cards 50, and event cards 60, which correspond to the second type game items. The leader cards 30 and the multi-leader cards 40 do not serve as elements for constructing a deck, while the character cards 20, the stage cards 50, and the event cards 60 become elements for constructing the deck. Therefore, as long as the character cards 20, the stage cards 50, and the event cards 60 have the same color, the colors of leader cards 30 and the multi-leader cards 40 may be different from that of the character cards 20, the stage cards 50, and the event cards 60. Furthermore, the colors of leader cards 30 and multi-leader cards 40 may be different from each other.

### <Playmat 3>

Next, the playmat 3 will be explained referring FIG. 1. In the example shown in FIG. 1, an upper part of the playmat 3 is set so as to be located on an opponent's side. As shown in FIG. 1, the playmat 3 is formed in a quadrangular shape, for example, a rectangular shape. It is preferable that the playmat 3 be foldable so that it can be carried. Furthermore, it is preferable that the size thereof after folding be equal to the size of the game cards 2 so that it can be carried together with the game card 2.

On the playmat 3, multiple areas (regions) are formed. These multiple areas indicate places where the player may place game cards 2. In the explanation set forth below, an example with eight areas, that is, a deck area 31, a character area 32, a leader area 33, a stage area 34, a cost deck area 35, a cost area 36, a life area 37, and an out-of-gam area 38 will be used for the explanation. These eight areas may be any areas as long as they may have different roles. The names of these areas may be any ones as long as the players can understand the names of the areas when playing.

As shown in FIG. 1, the character area 32 is formed along an edge of the playmat 3 on the opponent's side (corresponding to a first edge). Since the character area 32 is the area where the character cards 20, which are central part of a battle of the game, are placed, the cards are placed near the opponent's side so that the opponent visually recognize them easily. The cost area 36 is formed along the edge on the player's side, which is opposite to the opponent's side (corresponding to a second edge). As described later, the cost area 36 is an area where a cost card(s) 10, which requires an operation of player, is placed, so that the cost area 36 is arranged near the player's side. The deck area 31, the leader area 33, the stage area 34, and the out-of-game area 38 are formed between the character area 32 and the cost area 36. The life area 37 and the cost deck area 35 are formed along an edge (corresponding to a third edge), which is sandwiched between the edge on the opponent's side and the edge on the player's side. In the example shown in FIG. 1, the life area 37 and the cost deck area 35 are formed along the left edge of the playmat 3.

The deck area 31 is an area where a deck constructed by a player is stacked wherein the deck is made up of stacked game cards 2 in a state where they may not be identifiable. That is, on the deck area 31, the game cards 2 are stacked and placed so that front side faces of the game cards are faced down.

The character area 32 is an area where cost cards 10 and character cards 20 can be placed. A character card 20 is placed from the player's hand if the value of the cost information 25 thereof is equal to or less than the total number of cost cards 10 placed in the cost area 36. The cost cards 10 to be placed in the character area 32 are moved from the cost area 36 if the cost cards 10 placed in the cost area 36 are in the active state. The cost cards 10 placed in the character area 32 are stacked under the character cards 20 so that part of the cost cards 10 is hidden. In an explanation set forth below, a placement of the cost cards 10 under the character cards 20 is referred to as "giving a power to the character card 20." By giving the power to it, the attack value of the character card 20 is increased. For simplification in the explanation set forth below as an example, the attack value of the character cards 20 increases by "1000" points each time one cost card 10 is stacked.

The character cards 20 placed in the character area 32 can attack either a character card 20 placed in the character area 32 of the opponent player, or a leader card 30 or a multi-leader card 40 placed in the leader area 33 of the opponent player.

The leader area 33 is an area where a leader card 30 or a multi-leader card 40 and a cost card(s) 10 are placed. The leader card 30 or the multi-leader card 40 in the leader area 33 is placed at the start of the game. The cost card 10 placed in leader area 33 is moved from the cost area 36, but the cost cards 10 in an active state become movable. The cost cards placed in the leader area 33 are stacked under the leader card 30 or the multi-leader card 40 so that part thereof is hidden. In the explanation set forth below, to stack a cost card 10 under the leader card 30 or the multi-leader card 40 is referred to as "giving a power to the leader card 30 or the multi-leader card 40." By giving the power thereto, the attack value of the leader card 30 or the multi-leader card 40 increases.

For simplification, explained below is an example in which the attack value of the leader card 30 or the multi-leader card 40 increases by "1000" points each time one cost card 10 is stacked. Also, similar to the case of giving a power to the character cards 20, as an example, the attack value of the leader card 30 or the multi-leader card 40 increases by "1000" points each time one card 10 is stacked in case where a power is given to the leader card 30 or the multi-leader card 40. However, the value to be given to the character cards 20 and that given to the leader card 30 or the multi-leader card 40 may differ from each other.

The stage area 34 is an area where a stage card(s) 50 can be placed. The stage card mn50 is placed from the player's hand if the value written in the cost information 25 is less than or equal to the total number of cost cards 10 placed in cost area 36.

The cost deck area 35 is an area where cost cards 10 can be placed. At the start of the game, a predetermined number of cost cards 10 are stacked and placed in the cost deck area 35. In the description set forth below, for simplification thereof, ten cost cards 10 are stacked and placed in the cost deck area 35 at the start of the game.

The cost area 36 is an area where a predetermined number of cost cards 10 are placed from the cost deck area 35. In the description of the example, three cost cards 10 are drawn and placed from the cost deck area 35.

The life area 37 is an area where at least any ones of the character cards 20, the stage cards 50, and the event cards 60, are placed as many as a numerical value written on the life information 27 of the leader card 30 or the multi-leader card 40, which are placed in the leader area 33.

The out-of-game area 38 is an area where used game cards 2 are placed.

### <Game Preparation>

Each of the players prepares his or her own playmat 3 so as to face the playmat 3 of the opponent player.

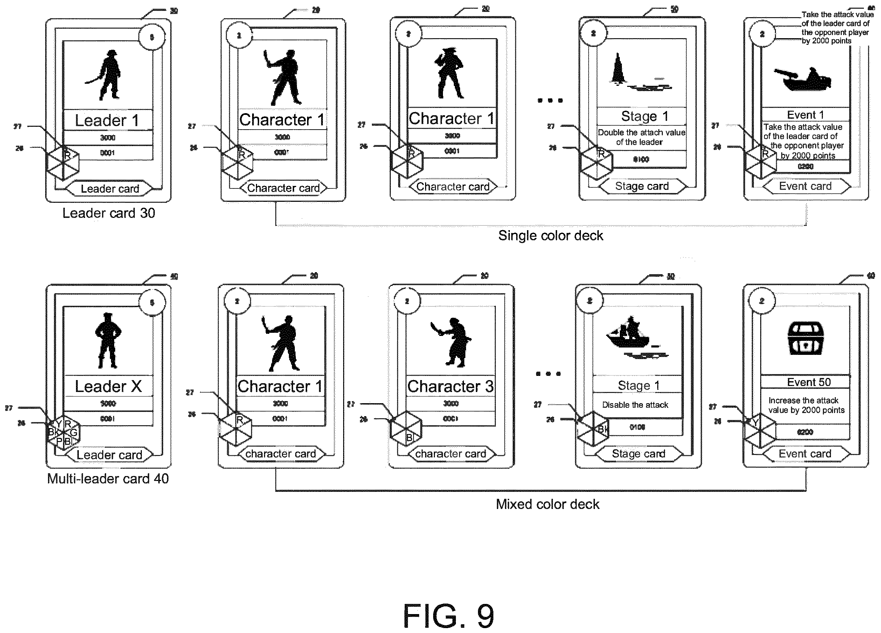

Here, a deck used by each of the players will be described below. FIG. 9 is a diagram illustrating a deck. As mentioned above, such a deck can be constructed from character card(s) 20, stage card(s) 50, and event card(s) 60 which respectively have the same color information 27 as that of the leader card to be used. As shown in FIG. 9, for example, if the leader card to be used has a single piece of color information 27 which is "red," the deck can be constructed from a character card(s) 20, a stage card(s) 50, and an event card(s) 60 whose color information 27 indicate "red". On the other hand, if a multi-leader card 40 is used, a deck can be constructed from any of the character card(s) 20, stage card(s) 50, and event card(s) 60. That is, such a deck (mixed color deck) can be constructed from the character card(s) 20, the stage card(s) 50, and the event card(s) 60 with the color information 27 whose color is any of the colors of all the groups, that is, "red," "green," "blue," "purple," "black," or "yellow."

To facilitate understanding of this embodiment, first, described is an example where the leader card to be used by the player is a leader card 30 with a single piece of the color information 27.

The player selects a character card(s) 20, a stage card(s) 50, and an event card(s) 60 with the same color information 27, and constructs a deck to be placed in the deck area 31. The number of cards in the constructed deck is predetermined. In the explanation set forth below, 50 cards are used as an example. The constructed deck is placed in the deck area 31 in a state where the front faces of the cards are faced down.

The player selects one leader card 30 with the same color information as that of the constructed deck and places the leader card 30 so as to be faced up in the leader area 33.

A predetermined number of cost cards 10 are placed in the cost deck Area 35. In the explanation set forth below, ten cards are used as an example.

The player draws a predetermined number of cards from the game cards placed in the deck area 31 for his or her hand. Here, five game cards 2 are drawn.

The player draws game cards 2, whose number is equal to the number indicated in the life information 28 of the leader card 30 placed in the leader area 33, from game cards placed in the deck area 31, and places them so as to be faced down in the life area 37.

### <Game Flow>

When the game starts, a player who goes first and a player who goes second are determined between the players, and turns are taken alternately starting from the player who goes first.

Each turn consists of multiple phases such as a refresh phase, a draw phase, a cost phase, a main phase, and an end phase. In the explanation set forth below, five phases are used as an example, but the types of phases in each turn may vary.

During the refresh phase, the game cards 2 placed on the playmat 3 (field) are activated. Additionally, the cost cards 10 placed in the character area 32 are turned into in an active state and returned to the cost area 36.

In the draw phase, the player draws one game card 2 from the deck area 31 and adds it to his or her hand.

In the cost phase, two cost cards 10 are drawn from the cost deck area 35 and placed in the cost area 36 in active status.

In the main phase, the player must perform at least one of the following actions:
- Place a character card 20 from his or her hand into the character area 32.
- Place a stage card 50 from his or her hand into the stage area 34.
- Put an event card 60 on the playmat 3.

During this phase, character cards 20, stage cards 40, and event cards 50 whose value in the cost information 25 is equal to or less than the number of the cost cards 10 in an active state which are placed in the cost area 36, are placed on the playmat 3, from his or her hand in an active state.

Next, in the main phase, the effects of stage cards 50 and the event cards 60 can be activated. The stage cards 50 whose effect has been activated is turned into a rest state from the active state. The activated event cards 60 are moved to the out-of-game area 38.

Additionally, in the main phase, it is possible to give a power to the character cards 20 and the leader cards 30.

Next, the player executes an attack against the opponent player. The player determines a game card 2 (attack card), which is used for the attack, from either the character cards 20 in his or her character area 32 or the leader card 30 in his or her leader area 33. Subsequently, the player determines a character card 20 placed in the character area 22 of the opponent player or a leader card 30 (target card) to be attacked, which is placed in the character area 32 of the opponent player. The attack card is then used to attack the target card. The outcome of the battle is determined depending on whether the value of the power information 22 of the attack card exceeds the value of the power information of the target card. The battle is won when the power of the attack card exceeds that of the target card.

If the target card is a character card 20, and the value of the power information 22 of the attack card exceeds the value of the power information of the target card, the player wins the battle for that turn. The attacked opponent player places the attacked character card 20 in the out-of-game area 38.

If the target card is a leader card 30, and the value of the power information 22 of the attack card exceeds the value of the power information of the target card, the attacking player wins the battle at that turn. At this time, the opponent player, who receives the attack, adds one of game cards to his or her hand from his or her life area 37. If the opponent player has no game card in the life area 37 to be added to his or her hand, the attacking player wins, and the game ends.

In the end phase, game cards 2 in a rest state on the playmat 3 are turned into an active state, and then the turn ends.

### 〈Example 1〉

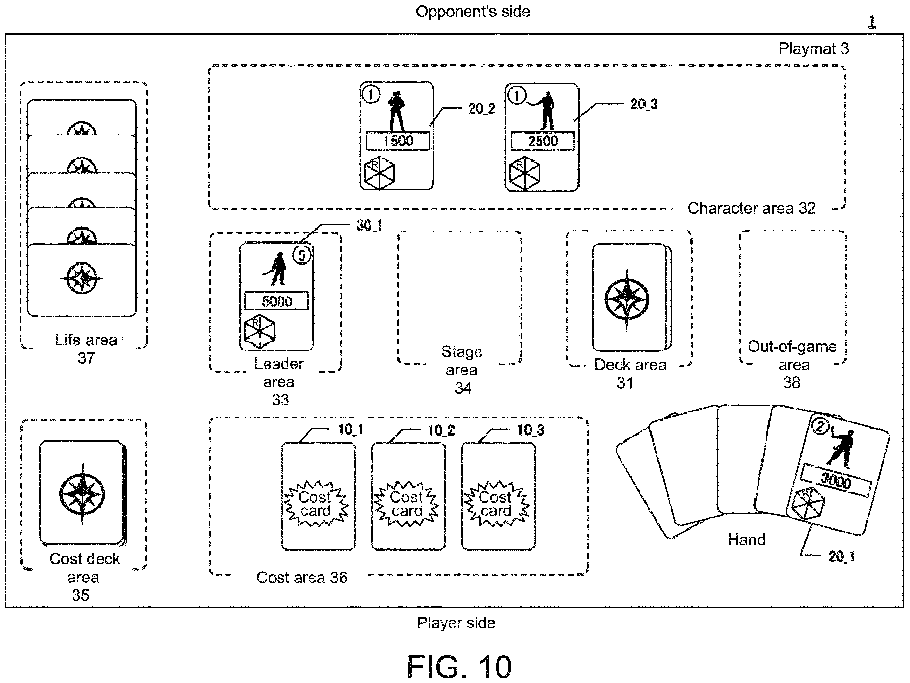

In Example 1 of the present embodiment, as an example, cards are placed from his or her hand onto the playmat 3 in the main phase, and a cost is given to a character card. In this example, as shown in FIG. 10, the player's hand includes a character card 20_1, and the following cards are placed on the playmat 3:
- Two character cards 20_2 and 20_3 in the character area 32;
- One leader card 30_10 in the leader area 33 thereof; and
- Three active cost cards 10_1 through 10_3 in the cost area 36 thereof.

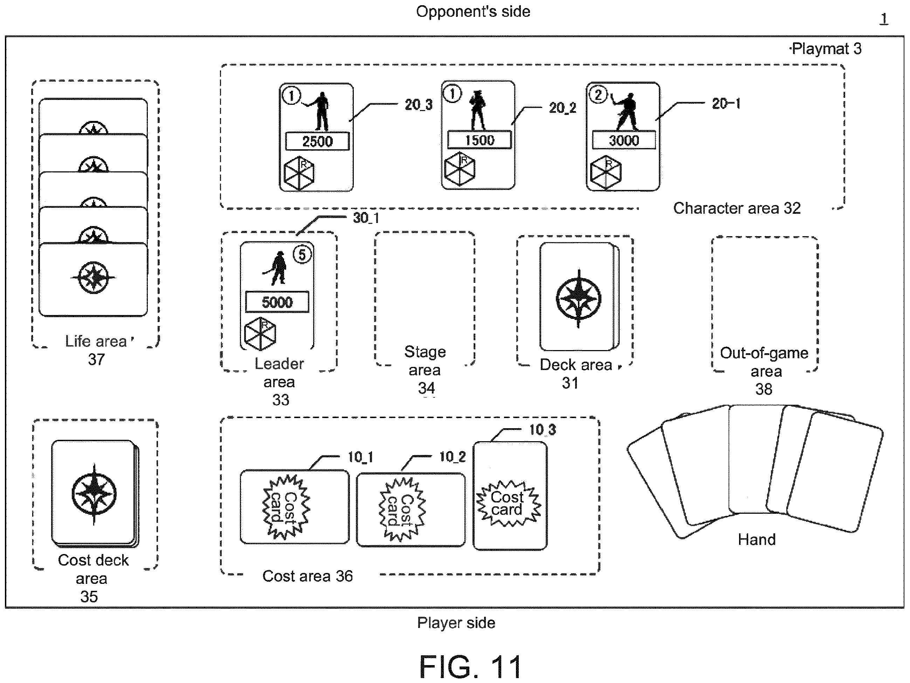

In the main phase, the player attempts to place the character card 20_1 having cost information 25 which is "2", and attack value information 25, which is "3000" points, from his or her hand into the character area 32. Here, since the cost information 25 of the character card 20_1 is "2", two out of the three cost cards 10 in the active state placed in the cost area 36, are turned into a rested state, and the character card 20_1 is placed in the character area 32. As shown in FIG. 11, the following cards are placed in the arrangement of the game cards 2 on the playmat at this time:
- Three character cards 20_1 to 20_3 in the character area 32;
- One leader card 30 in the leader area 33; and
- Two cost cards 10_1 and 10_2 in the rested state and one cost card 10_3 in the active state in the cost area 36.

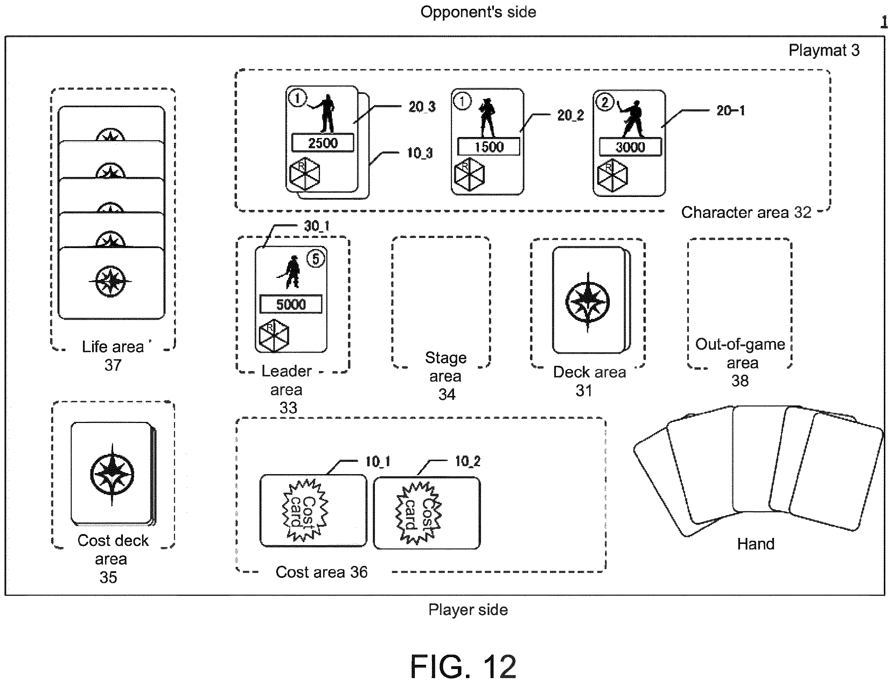

Furthermore, the player assigns a cost to the character card 20_3. At this time, as shown in FIG. 12, in the arrangement of the game cards 2 on the playmat 3, the cost card 10_3, which was in an active state, is placed beneath the character card 20_3. The attack value information 25 of the character card 20_3, which is placed on the cost card 10_3 increases from 2500 'to 3500 points since the attack value increases by 1000 points at each power giving.

### <Example 2>

In example 2 of the present embodiment, multiple powers are assigned to a leader card 30. In this example, as shown in FIG. 10, the hand of the player includes a character card 20_1, and the following cards are placed on the playmat 3:
Two character cards, that is, the character cards 20_2 and 20_3, in the character area 32, One leader card, 30 in the leader area 33, and
Three active cost cards, that is, the cost cards 10_1 to 10_3 in an active state, in the cost area 36 therein.

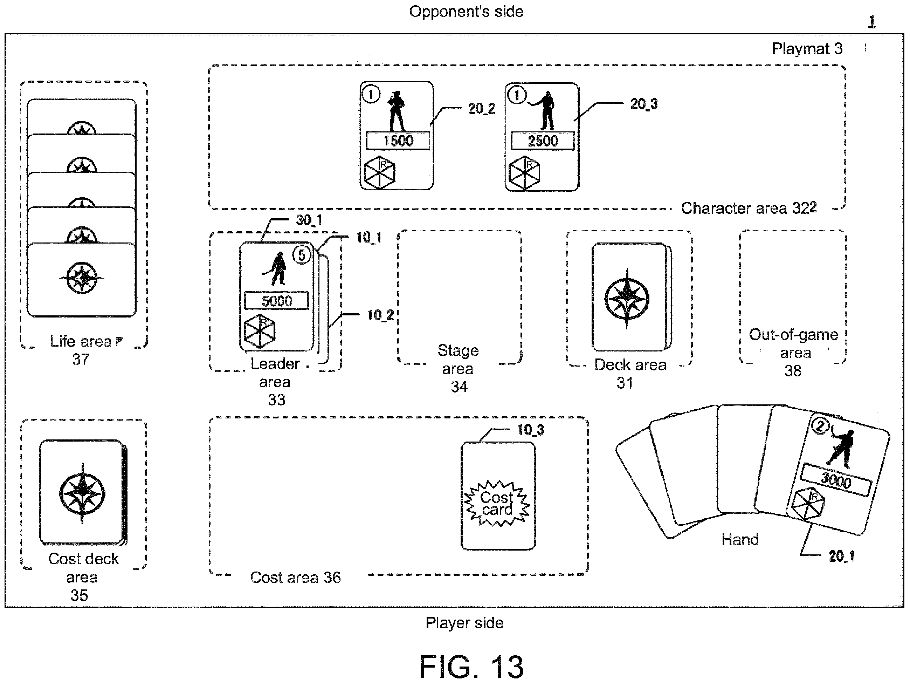

In the main phase, the player gives two costs to the leader card 30_1. At this time, the arrangement of the game cards 2 on the playmat 3 is shown in FIG. 13, wherein the active cost cards 10_1 and 10_2, which were in the active state are placed beneath the leader card 30_1. The attack value information 25 of the leader card 30_1, placed on the cost cards 10_1 and 10_2, increases from 5000 to 7000 points since the attack value increases by 1000 points at each power assignment.

Furthermore, in the above explanation, although the power information 22 is described as an attack value against the opponent player, it may represent either an attack value against the opponent player or a defense value against an attack from the opponent player. By this way, a variation in the battle content may increase, thereby improving the overall interest in the game.

According to the present embodiment, the cost card 10 is configured to fulfill the role of a second function which increases the attack value of a game card combined with the cost card 10. This configuration results in a diverse game progression depending on combined game cards, thereby enhancing the overall interest in the game.

### <Example 3>

In the Example 3, a multi-leader card 40 is used.

As mentioned above, a deck used in the game can only be constructed from a character card(s) 20, a stage card(s) 50, and an event card(s) 60 which have the same color information 27. This emphasizes the story aspect of the game by introducing the concept of groups (companions, episodes), to which the character belong.

However, there are situations in the game where characters other than the leader of a group may fight together with a different group(s), and there may be a desire to realize such situations in the game. To address this challenge, one method is to set two or more pieces of color information 27 for the character cards 20, the stage cards 50, and the event cards 60. However, in this case, the concept of groups (companions, episodes) may become ambiguous.

Therefore, in Example 3, each of game cards 2 has a single piece of color information 27, and a predetermined pack including a plurality of the game cards 2 is provided. However, each pack does not necessarily include the game cards with the same color information 27 and each pack may include game cards 2 with different color information 27. These two or more types of packs are provided. These two or more types of such packs are prepared and each of the packs contain game cards 2 with different color information 27. While the characters associated with the game cards 2 do not originally belong to the same group, they are specific characters related in some way. On the other hand, packs which in advance includes one multi-leader card 40 are prepared, and in the pack, it may be specified that a multi-leader card 40 is included.

In order to allow the construction of a deck from a character card(s) 20, a stage card(s) 50, and event card(s) 60 associated with characters belonging to different groups, such a multi-leader cards 40 is used. The multi-leader cards 40 includes all the pieces of the color information 27, so that a deck (mixed color decks) may be built from a character card(s) 20, a stage card(s) 50 and an event card(s) 60 with different color in the color information 27, which are provided by the pack. Except for using such a deck (mixed color deck) constructed in this way, the usage of the character card(s) 20, the stage card(s) 50, and the event card(s) 60 which serve as component elements is the same as that described in the above embodiments and examples. Additionally, the usage of the multi-leader cards 40 is the same as described in the above embodiments and examples.

While preferred embodiments have been described to illustrate the present invention, the present invention is not necessarily limited to the above embodiments and can be variously modified and implemented within the scope of the technical idea thereof.

### [Note 1]

A game toy comprises first type items, and second type items which serve as an element for constructing a deck, wherein the first type items are associated with a first type character, the second type items are associated with a second type character, the first type items include two or more pieces of identification information, which is visually identifiable, the second type items include one of the two or more pieces of the identification information which is visually identifiable, groups to which the first type character and the second type character respectively belong are identified from the identification information, and the deck can be constructed from the second type items, which include any one of the two or more pieces of identification information of the first type character.

### [Note 2]

In the game toy according to Note 1, the first type items include identification information of all groups to which the second type character belongs.

### [Note 3]

The game toy according to Note 2 or 3 further includes third type items, wherein the third type items are associated with the first type character, and the third type items include one or two of the two or more pieces of identification information which is visually identifiable, and the deck can be constructed from the second type items which include the same identification information as that of the third game items.

### [Note 4]

In the game toy according to any one of Notes 1 - 3, the identification information of the first type items, the second type items and the third type items is arranged at the same position thereof.

### [Note 5]

In the game toy according to any one of Notes 1-4, the identification information is color information.

### [Not 6]

In the game toy according to any one of Notes 1 - 5, the first type items include two or more pieces of color information in a state where the two or more pieces of color information are adjacent to each other.

### [Note 7]

In the game toy according to any one of Notes 1 - 6, the first type items and the third type items are visually distinguished from the second type items.

### [Note 8]

In the game toy according to any one of Notes 1-7, only ones associated with a specific character among the second type items can be the element for constructing the deck at time of usage of the first type items.

### [Note 9]

The game toy according to any one of Notes 1 - 8 further includes fourth type items which are not associated with any character and do not include the identification information, wherein the first type items, the second type items and the third type items include character information, which is visually identifiable, the character information includes cost information required for placing the second type items in a field, and the fourth type items serve as consideration of the cost information.

### [Note 10]

In the game toy according to any one of Notes 1 - 9, the character information and the identification information is respectively arranged on the first type items, the second type items and the third type items, so as not be overlapped each other.

### [Note 11]

In the game toy according to any one of Notes 1 - 10, the character information includes attack value information, which indicates an attach value against a game item of an opponent player, and the fourth type items serve as consideration for increasing the attack value information.

### [Note 12]

The game toy according to any one of Notes 1 - 11 further includes a playmat on which the first type items, the second type items, the third type items and the fourth type items are placed.

### [Note 13]

In the game toy according to any one of Notes 1 - 12, a first placement area which is visually identifiable, a second placement area which is visually identifiable, and a third placement area which is visually identifiable, are arranged on the playmat, the first placement area is an area where the first type items and the third type items are placed, the second placement area is an area where the second type items are placed, and the third placement area is an area where the fourth type items are placed.

### [Note 14]

In the game toy according to any one of Notes 1 - 13, a fourth placement area, which is visually identifiable, is arranged on the playmat, and the fourth placement area is an area where the deck is arranged.

### [Note 15]

In the game toy according to any one of Notes 1 - 14, the first type items, the second type items, the third type items and the fourth type items are game cards.

## Claims

1. A game toy comprising:
first type items; and
second type items which serve as an element for constructing a deck,
wherein the first type items are associated with a first type character,
the second type items are associated with a second type character,
the first type items include two or more pieces of identification information, which is visually identifiable,
the second type items include one of the two or more pieces of the identification information which is visually identifiable,
groups to which the first type character and the second type character respectively belong are identified from the identification information, and
the deck can be constructed from the second type items, which include any one of the two or more pieces of identification information of the first type character.

2. The game toy according to claim 1, wherein the first type items include identification information of all groups to which the second type character belongs.

3. The game toy according to claim 2, further including third type items,
wherein the third type items are associated with the first type character,
the third type items include one or two of the two or more pieces of identification information which is visually identifiable, and
the deck can be constructed from the second type items which include the same identification information as that of the third game items.

4. The game toy according to claim 3, wherein the identification information of the first type items, the second type items and the third type items is arranged at the same position thereof.

5. The game toy according to claim 4, wherein the identification information is color information.

6. The game toy according to claim 5, wherein the first type items include two or more pieces of color information in a state where the two or more pieces of color information are adjacent to each other.

7. The game toy according to claim 6, wherein the first type items and the third type items are visually distinguished from the second type items.

8. The game toy according to claim 3, wherein only ones associated with a specific character among the second type items can be the element for constructing the deck at time of usage of the first type items.

9. The game toy according to either claim 3 or claim 8, further including fourth type items which are not associated with any character and do not include the identification information,
wherein the first type items, the second type items and the third type items include character information, which is visually identifiable,
the character information includes cost information required for placing the second type items in a field,
the fourth type items serve as consideration of the cost information.

10. The game toy according to claim 9, wherein the character information and the identification information is respectively arranged on the first type items, the second type items and the third type items, so as not be overlapped each other.

11. The game toy according to claim 9, wherein the character information includes attach value information, which indicates an attach value against a game item of an opponent player, and
the fourth type items serve as consideration for increasing the attack value information.

12. The game toy according to claim 9, further including a playmat on which the first type items, the second type items, the third type items and the fourth type items are placed.

13. The game toy according to claim 12, wherein a first placement area which is visually identifiable, a second placement area which is visually identifiable, and a third placement area which is visually identifiable, are arranged on the playmat,
the first placement area is an area where the first type items and the third type items are placed,
the second placement area is an area where the second type items are placed, and
the third placement area is an area where the fourth type items are placed.

14. The game toy according to claim 13, wherein a fourth placement area, which is visually identifiable, is arranged on the playmat, and the fourth placement area is an area where the deck is arranged.

15. The game toy according to claim 1, wherein the first type items, the second type items, the third type items and the fourth type items are game cards.
